# EUROPEAN PATENT APPLICATION

(11) **EP 4 456 258 A1**
(43) Date of publication of application: **30.10.2024**
(21) Application number: 24172820.3
(22) Date of filing: 26.04.2024
(51) Int. Cl.: H01M 10/613, H01M 50/213

(54) **BATTERY PACK**

(30) Priority: 27.04.2023 CN 202310479230; 27.04.2023 CN 202321010436 U; 13.06.2023 WO PCT/CN2023/099940
(71) Applicant: Eve Energy Co., Ltd, Huizhou, Guangdong 516006 (CN)
(72) Inventor: QUI, Wencong, Huizhou, Guangdong 516006 (CN); CHEN, Zhiwei, Huizhou, Guangdong 516006 (CN); CHEN, Zhaohai, Huizhou, Guangdong 516006 (CN); XU, Yuhong, Huizhou, Guangdong 516006 (CN); ZHONG, Yu, Huizhou, Guangdong 516006 (CN)
(74) Representative: Murgitroyd & Company

(57) **Abstract**

A battery pack includes: a case body including an accommodation trough and a pressure relief member; battery modules; and trays each corresponding to corresponding one of the battery modules and including a tray body and supports; where each of the battery modules is bonded to an upper side of the tray body by an adhesive, a first end of each of the supports is connected to the tray body, a second end of the support is in contact with a bottom portion of the accommodation trough, the tray body and the bottom portion of the accommodation trough are spaced apart to form a pressure relief cavity communicating with the pressure relief member, each of the supports is provided with a first through hole, and the adhesive is bonded to the bottom portion of the accommodation trough through the first through hole from the upper side.

## Description

### TECHNICAL FIELD

The present disclosure relates to the field of battery technologies, and for example to a battery pack.

### BACKGROUND

A battery pack may include a case body, a battery module and a tray, where the case body includes a pressure relief member, a bottom plate and an accommodation trough disposed on the bottom plate, the battery module is disposed in the accommodation trough by the tray, and the tray abuts against a notch of the accommodation trough with a fastening screw, so that the tray is tightly secured to the case body, and the tray and the bottom plate are spaced apart to form a pressure relief cavity communicating with the pressure relief member. However, the battery pack having the above structure has a disadvantage in that the bottom of the battery module is protected only by the bottom plate, so that the impact protection effect of the bottom of the battery module is poor; and when a thermal runaway of the battery module occurs, a high-pressure gas is directly discharged from the pressure relief member through the pressure relief cavity, and the pressure relief is too fast, so that the oxygen inside the pressure relief cavity is not exhausted and an open fire occurs when the high-pressure gas is discharged from the pressure relief member, and thus safety of the battery pack is poor.

### SUMMARY

The present disclosure provides a battery pack capable of achieving good impact resistance and high safety.

Embodiments of the present disclosure provide a battery pack, including: a case body, a plurality of battery modules, and a plurality of trays each corresponding to corresponding one of the battery modules, where the case body is provided with an accommodation trough and one or more pressure relief members, the each of the trays includes a tray body and a plurality of supports, each of the battery modules is bonded to an upper side of the tray body of the tray corresponding to the battery module by an adhesive, the plurality of supports are spaced apart and projected from a lower side of the tray body, a first end of each of the supports is connected to the tray body, a second end of the each of the supports is in contact with a bottom portion of the accommodation trough, the tray body and the bottom portion of the accommodation trough are spaced apart to form a pressure relief cavity communicated with of the pressure relief members, each of the supports is provided with a first through hole penetrating through the second end and the first end of the support, the first through hole is communicated with the upper side of the tray body, and the adhesive is bonded to the bottom portion of the accommodation trough through the first through hole from the upper side of the tray body.

In some embodiments of the present disclosure, each of the battery modules includes a plurality of battery cells, the tray body of the tray corresponding to the each of the battery modules includes a plurality of cell holders for holding the battery cells, the plurality of cell holders are spaced apart, and each of the battery cells corresponds to corresponding one of the cell holders, each of the cell holders is provided with at least one of the supports at a peripheral side of the cell holder, and the first through hole in each of the supports is communicated with an interior of corresponding one of the cell holders.

In some embodiments of the present disclosure, each of the cell holders includes a supporting table configured to support corresponding one of the battery cells, where the supporting table is provided with a second through hole penetrating through a top portion and a bottom portion of the supporting table, and the second through hole is opposite to a pressure relief portion of the battery cell.

In some embodiments of the present disclosure, each of the battery cells is a cylindrical cell and the second through hole is a circular hole.

In some embodiments of the present disclosure, each of the cell holders is provided with at least three ones of the supports at a peripheral side of the cell holder, and the at least three supports are evenly spaced apart around a center of the cell holder.

In some embodiments of the present disclosure, each of the cell holders further includes a plurality of limiting plates projecting from the top portion of the supporting table of the cell holder, where the plurality of limiting plates are disposed around a peripheral side of the supporting table and configured to limit the battery cell corresponding to the cell holder, two adjacent ones of the limiting plates are spaced apart to form a gap through which the first through hole is communicated with the top portion of the supporting table.

In some embodiments of the present disclosure, a reinforcing plate is connected between each of the supports and a supporting table adjacent to the support and projected from a lower side of the tray body of the tray provided with the supports.

In some embodiments of the present disclosure, the adhesive is a structural adhesive.

In some embodiments of the present disclosure, the battery pack further includes a cover plate and a thermally conductive adhesive layer, where the cover plate is provided at the notch of the accommodation trough and bonded to the top portion of each of the plurality of battery modules by the thermally conductive adhesive layer.

In some embodiments of the present disclosure, the cover plate is locked to the notch of the accommodation trough by a locking member.

Advantageous effects of the present disclosure are that the first end of the support is connected to the tray body and the second end of the support is in contact with the bottom portion of the accommodation trough to enable the tray body to be supported in the accommodation trough, so that the support provides a supporting function for the tray and the battery module; the first through hole communicating with the upper side of the tray body is disposed inside the support to enable the adhesive to be bonded to the bottom portion of the accommodation trough through the first through hole from the upper side of the tray body, so that the tray, the battery module, and the bottom portion of the accommodation trough are fixed together. As such, the overall rigidity of the bottom portion of the case body can be improved to provide effective protection for the battery module, and the impact resistance of the bottom portion of the battery pack can be improved, and the bottom portion of the case body can be prevented from beating the bottom portion of the tray to generate noise. High-temperature substances generated when the thermal runaway of the battery module occurs (such as high-temperature gas and high-temperature particles) may enter the pressure relief cavity, and then the plurality of supports distributed at intervals in the pressure relief cavity obstructs the flow of the high-temperature substances in the pressure relief cavity, which prolongs the time for the high-temperature substances to remain in the pressure relief cavity. As such, the temperature of the high-temperature substance can be reduced and the oxygen inside the pressure relief cavity can be reduced, preventing occurrence of the open fire when the high-temperature substances are discharged from the pressure relief members, and improving the safety of the battery pack.

### DESCRIPTION OF THE DRAWINGS

FIG. 1 is a schematic diagram of a three-dimensional structure of a battery pack according to some embodiments of the present disclosure.
FIG. 2 is an exploded view of the battery pack according to some embodiments of the present disclosure.
FIG. 3 is a cross-sectional view (adhesive not shown) of the battery pack according to some embodiments of the present disclosure.
FIG. 4 is an enlarged view of a region A in FIG. 3.
FIG. 5 is a schematic diagram showing a connection structure among a battery cell, an adhesive, a tray, and a bottom portion of an accommodation trough according to some embodiments of the present disclosure.
FIG. 6 is an assembly view of a battery module and a tray according to some embodiments of the present disclosure.
FIG. 7 is an exploded view of a battery module, a tray, and a thermally conductive structural adhesive according to some embodiments of the present disclosure.
FIG. 8 is a perspective view of the tray from a viewpoint according to some embodiments of the present disclosure.
FIG. 9 is an enlarged view of a region B in FIG. 8.
FIG. 10 is a perspective view of the tray from another viewpoint according to an embodiment of the present disclosure.
FIG. 11 is an enlarged view of a region C in FIG. 10.

In FIGS:
1. Case body; 11. Accommodation trough; 12. Bottom plate; 13. Side plate; 14. End plate; 15. Side beam; 151. Pressure relief channel; 16. First reinforcing beam; 17. Second reinforcing beam; 18. Cover plate; 2. Battery module; 21. Battery cell; 22. Busbar; 3. Tray; 30. Tray body; 31. Cell holder; 311. Supporting table; 3111. Second through hole; 3112. Extension portion; 312. Limiting plate; 313. Gap; 32. Support; 321. First through hole; 33. Reinforcing plate; 4. Adhesive; 5. Pressure relief member; 6. Thermally conductive adhesive layer; 7. Pressure relief cavity.

### DETAILED DESCRIPTION

In description of the present disclosure, it should be noted that the terms "interconnection", "connection" and "fixing" should be understood in a broad sense, unless otherwise clearly specified and defined. For example, "fixing" can be a fixed connection, a detachable connection, or integrated connection. It can be a mechanical connection or an electrical connection. It can be directly connected or indirectly connected through an intermediary. It can also be the connection between two elements or the interaction between two elements. Those ordinary skilled in the art can understand the specific meanings of the above terms in the present disclosure according to specific situations.

In the present disclosure, it should he noted that unless otherwise clearly defined and limited, a first feature "on" or "under" a second feature may mean that the first feature directly contacts the second feature, or that the first feature contacts the second feature via an additional feature there between instead of directly contacting the second feature. Moreover, the first feature "on", "above", and "over" the second feature may mean that the first feature is right over or obliquely upward over the second feature or mean that the first feature has a horizontal height higher than that of the second feature. The first feature "under", "below", and "beneath" the second feature may mean that the first feature is right beneath or obliquely downward beneath the second feature or mean that horizontal height of the first feature is lower than that of the second feature.

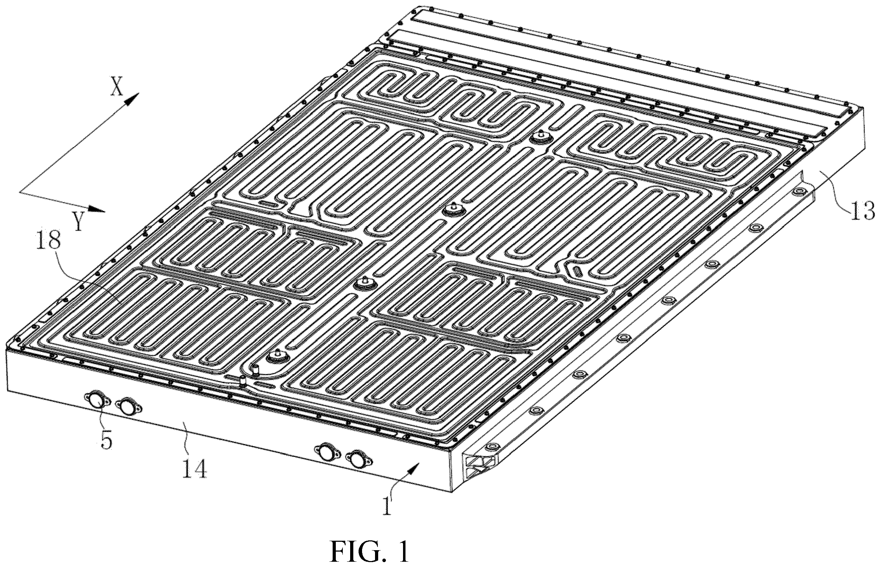

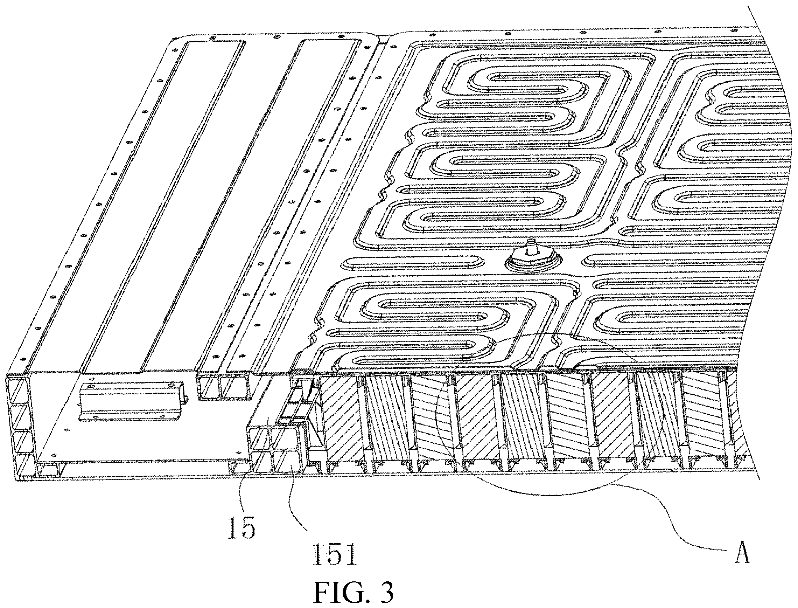

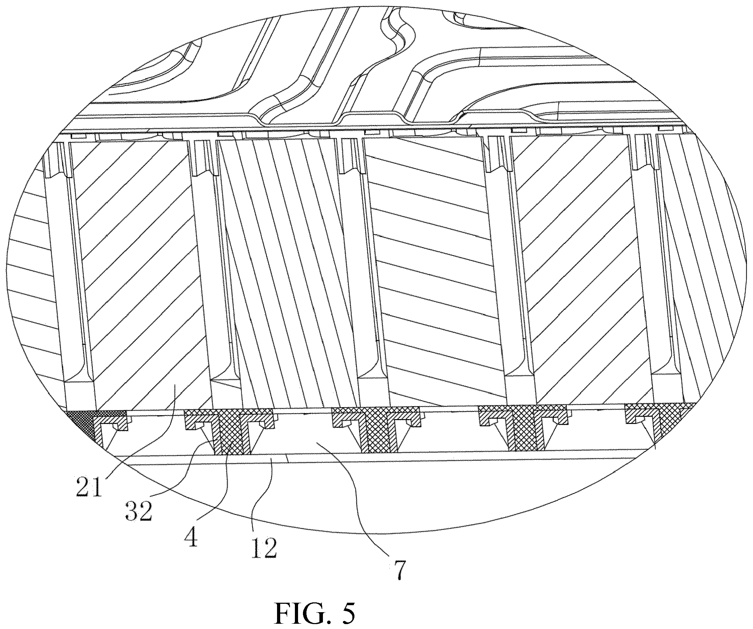

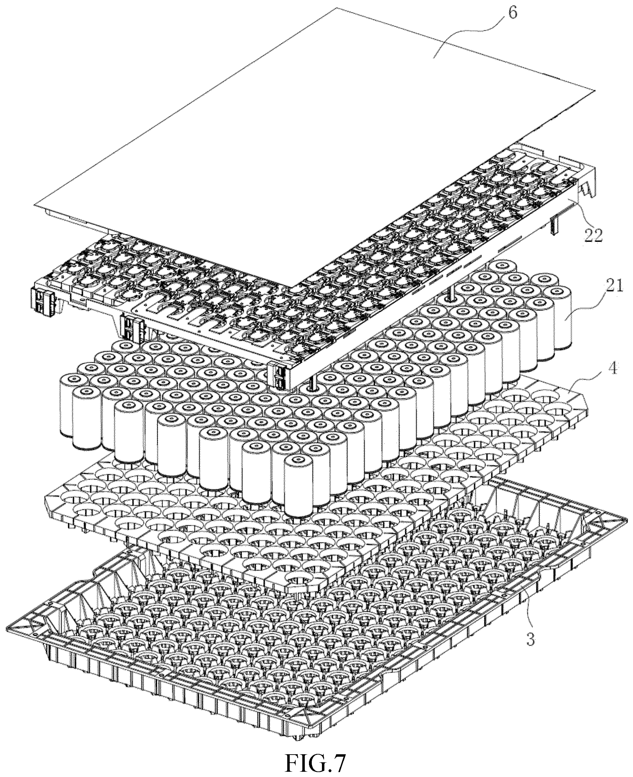

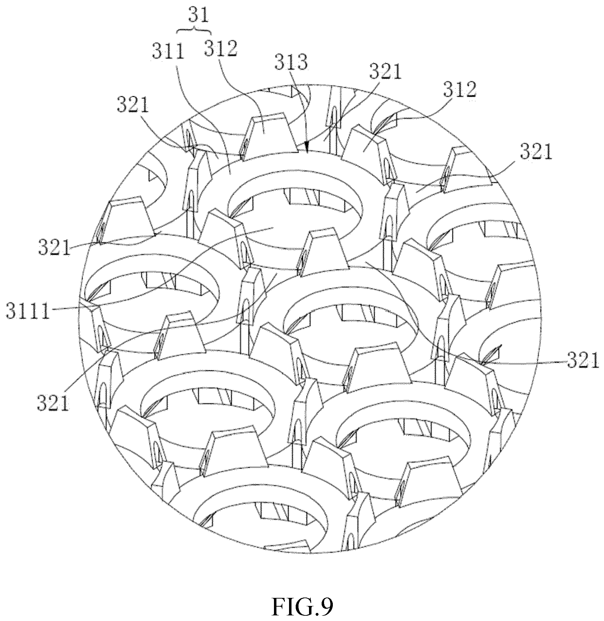

As shown in FIGS. 1 to 11, the present disclosure provides a battery pack, including a case body 1, a plurality of battery modules 2, and a plurality of trays 3 each corresponding to corresponding one of the battery modules 2. The case body 1 is provided with an accommodation trough 11 and one or more pressure relief members 5. Each of the trays 3 includes a tray body 30 and a plurality of supports 32. Each of the battery modules 2 is bond to the upper side of the tray body 30 of the tray 3 corresponding to the battery module 2 by an adhesive 4. The plurality of supports 32 are spaced apart and projected from the lower side of the tray body 30 of the tray 3, where a first end of each of the supports 32 is connected to the tray body 30, and a second end of the support 32 is in contact with the bottom portion of the accommodation trough 11. The tray body 30 and the bottom portion of the accommodation trough 11 are spaced apart to form a pressure relief cavity 7 communicating with corresponding one of the pressure relief members 5. Each of the supports 32 is provided with a first through hole 321 penetrating through the second end and the first end of the support 32, where the first through hole 321 is communicated with the upper side of the tray body 30, and the adhesive 4 is bonded to the bottom portion of the accommodation trough 11 through the first through hole 321 from the upper side of the tray body 30.

The first end of the support 32 is connected to the tray body 30 and the second end of the support 32 is in contact with the bottom portion of the accommodation trough 11 to enable the tray body 30 to be supported in the accommodation trough 11, so that the support 32 provides a supporting function for the tray 3 and the battery module 2. The first through hole 321 communicating with the upper side of the tray body 30 is disposed inside the support 32 to enable the adhesive 4 to be bonded to the bottom portion of the accommodation trough 11 through the first through hole 321 from the upper side of the tray body 30, so that the tray 3, the battery module 2, and the bottom portion of the accommodation trough 11 are fixed together. As such, the overall rigidity of the bottom portion of the case body 1 can be improved to provide effective protection for the battery module 2, and the impact resistance of the bottom portion of the battery pack can be improved, and the bottom portion of the case body 1 can be prevented from beating the bottom portion of the tray 3 to generate noise. In some embodiments, high-temperature substances generated when a thermal runaway of the battery module 2 occurs (such as high-temperature gas and high-temperature particles) may be discharged to the outside of the case body 1 through the pressure relief cavity 7 and the pressure relief members 5, thereby realizing pressure relief of the battery pack. The high-temperature substances generated when the thermal runaway of the battery module occurs (such as the high-temperature gas and the high-temperature particles) may enter the pressure relief cavity 7, and then the plurality of supports 32 distributed at intervals in the pressure relief cavity 7 obstructs the flow of the high-temperature substances in the pressure relief cavity 7, which prolongs the time for the high-temperature substances to remain in the pressure relief cavity 7. As such, the temperature of the high-temperature substances can be reduced and the oxygen inside the pressure relief cavity 7 can be reduced, preventing occurrence of the open fire when the high-temperature substances are discharged from the pressure relief members 5, and improving the safety of the battery pack.

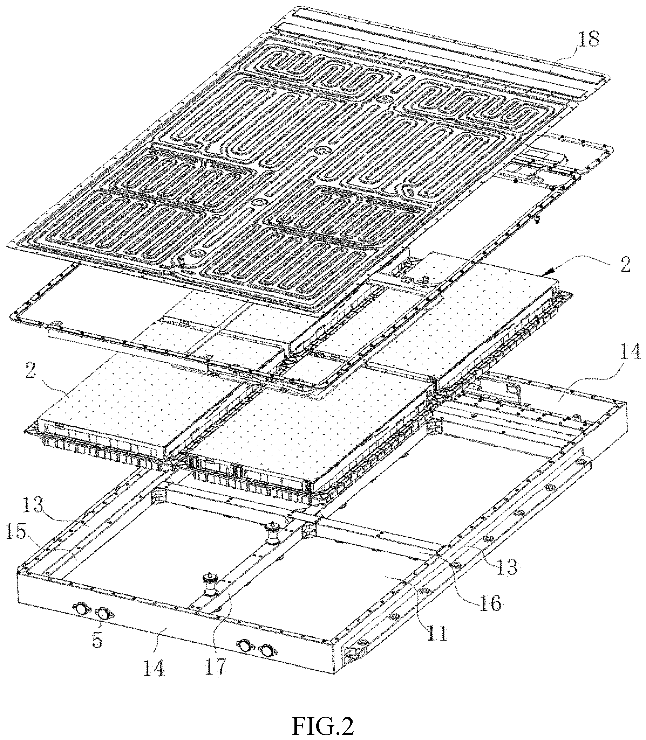

Referring to FIGS. 1 and 2, the case body 1 includes a case main body and a cover plate 18 covering the case main body. The case main body includes a bottom plate 12, two end plates 14 and two side plates 13, where the two end plates 14 and the two side plates 13 are provided on the bottom plate 12, the two end plates 14 are spaced apart along a longitudinal direction of the case body 1 (i.e., an X direction in FIG. 1), the two side plates 13 are spaced apart along a width direction of the case body 1 (i.e., a Y direction in FIG. 1), two opposite ends of each of the end plates 14 are respectively connected to the two side plates 13, the bottom plate 12, the two end plates 14, and the two side plates 13 are configured to form an accommodation trough 11, and the cover plate 18 is disposed at the notch of the accommodation trough 11. In the battery pack of the present embodiment, the bottom plate 12 is the bottom portion of the accommodation trough 11.

In the present embodiment, referring to FIG. 2, the battery pack includes four battery modules 2. Each of the battery modules 2 corresponds to corresponding one of the trays 3. In order to reinforce the overall structure of the case body 1, a first reinforcing beam 16 and a second reinforcing beam 17 are disposed inside the accommodation trough 11. The first reinforcing beam 16 and the second reinforcing beam 17 are connected at an included angle of 90°. A length direction of the first reinforcing beam 16 is parallel to a length direction of the case body 1, a length direction of the second reinforcing beam 17 is parallel to a width direction of the case body 1, and the accommodation trough 11 is divided into four accommodation bins by the first reinforcing beam 16 and the second reinforcing beam 17, where each of the accommodation bins is provided with corresponding one of the trays 3. The end plates 14 and the side plates 13 are provided with side beams 15 projecting from the inner side of the plates toward the accommodation trough 11, respectively, and the first reinforcing beam 16 and the second reinforcing beam 17 are connected to respective side beams 15, respectively. In some embodiments, when each of the trays 3 is disposed in corresponding one of the accommodation bins, the top portion of the tray 3 is fastened, by fasteners, such as screws, to the first reinforcing beam 16, the second reinforcing beam 17 and the side beams 15 corresponding to the circumference of the accommodation bin, respectively, and the supports 32 on the tray 3 are configured to support the bottom plate 12.

In some embodiments, referring to FIG. 2, the one or more pressure relief members 5 may be disposed on the end plates 14, one or more pressure relief channels 151 communicating with the pressure relief members 5 may be provided inside the side beams 15 of the side plates 13, and one or more exhaust port (not shown) communicating with the pressure relief cavity 7 may be provided at a side of each of the side beams 15 toward the inside of the accommodation bin, so that the high-temperature substances inside the pressure relief cavity 7 can sequentially enter the pressure relief channels 151 and the pressure relief members 5 through the exhaust ports, thereby realizing pressure relief of the battery pack. In some embodiments, the pressure relief members 5 may also be disposed on the side plates 13 or the bottom plate 12 or the cover plate 18, and arrangement of positions of the pressure relief members 5 is not specifically defined herein.

In other embodiments, the number of the battery modules 2 may be flexibly set as required.

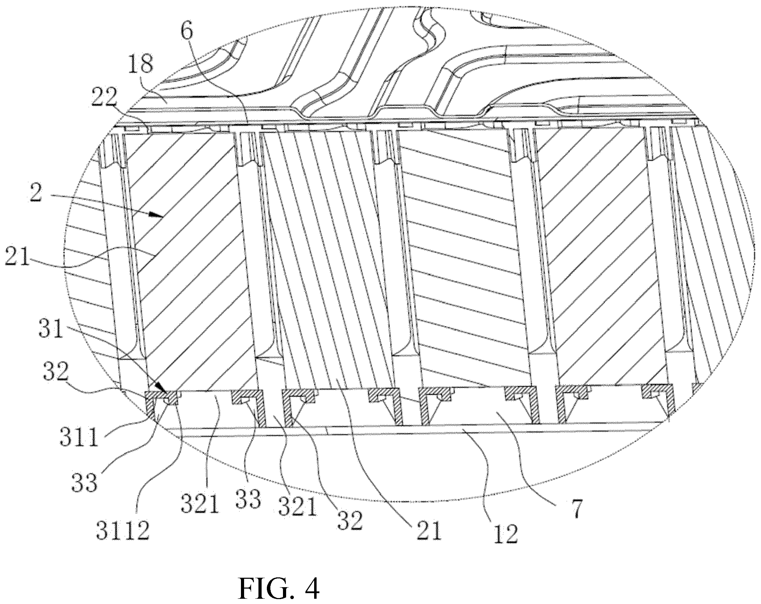

In the present embodiment, referring to FIGS. 4 to 9, each of the battery modules 2 includes a plurality of battery cells 21, the tray body 30 includes a groove and a plurality of cell holders 31 provided at the bottom portion of the groove, where each of the cell holders 31 is configured to hold corresponding one of the battery cells 21. The plurality of cell holders 31 are spaced apart, and each of the battery cells 21 corresponds to corresponding one of the cell holders 31. Each of the cell holders 31 is provided with at least one of the supports 32 at a peripheral side of the cell holder 31, and the first through hole 321 in each of the supports 32 is communicated with an interior of corresponding one of the cell holders 31. By providing the cell holders 31, each of the battery cells 21 can be disposed in corresponding one of the cell holders 31 sequentially, so as to facilitate arrangement of the battery cells 21. Since the first through hole 321 of the support 32 is communicated with the interior of the corresponding one of the cell holders 31, the adhesive 4 inside the cell holder 31 can overflow into the first through hole 321 to be bonded to the bottom portion of the accommodation trough 11, so that the battery cells 21, the tray 3, and the bottom portion of the accommodation trough 11 (i.e., the bottom plate 12) are fixed together.

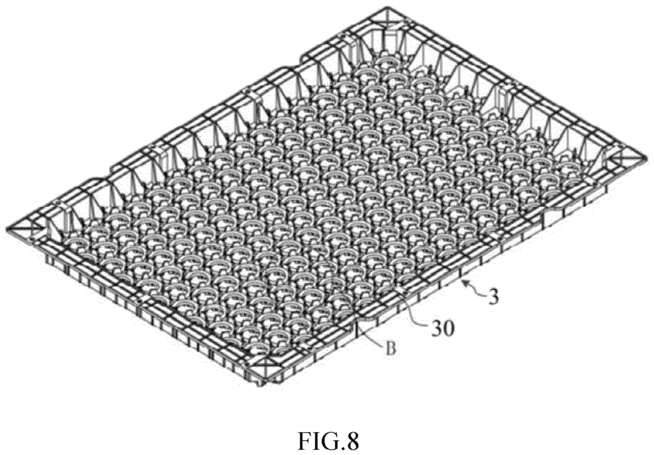

In order to ensure safety of the battery cells 21, a pressure relief portion is provided on each of the battery cells 21. When a thermal runway of the battery cell 21 occurs, a high-temperature substance generated inside the battery cell 21 may be discharged to the outside of the battery cell 21 through the pressure relief portion. In the present embodiments, referring to FIGS. 4 and 8, each of the cell holders 31 includes a supporting table 311 configured to support corresponding one of the battery cells 21, where the supporting table 311 is provided with a second through hole 3111 penetrating through a top portion and a bottom portion of the supporting table 311, and the second through hole 3111 is opposite to the pressure relief portion of the battery cell 31. Since the second through hole 3111 penetrates through the top portion and the bottom portion of the supporting table 311, the second through hole 3111 is communicated with the pressure relief cavity 7. In some embodiments, one end of the battery cell 21 provided with a pressure relief portion is disposed on the supporting table 311 and the pressure relief portion is opposite to the second through hole 3111. As such, when the thermal runway of the battery cell 21 occurs, the high-temperature substance can be discharged from the pressure relief portion through the second through hole 3111 to the pressure relief cavity 7 at the first time, and the pressure generated by the thermal runway is buffered by the pressure relief cavity 7.

In some embodiments, the second through hole 3111 is located in the middle of the supporting table 311, so that the battery cell 21 can be supported with a region where the supporting table 311 is located at the peripheral side of the second through hole 3111.

In the present embodiments, the battery cell 21 is a cylindrical cell, and the pressure relief portion of the battery cell 21 is generally circular, and the second through hole 3111 is a circular hole, so that the shape of the second through hole 3111 is adapted to the pressure relief portion of the battery cell 21, thereby facilitating optimization of the structure of the supporting table 311. In other embodiments, the battery cell 21 may be another type of cell, such as a square cell, and the specific shape of the second through hole 3111 may be flexibly adjusted according to the shape of the pressure relief portion on the battery cell 21.

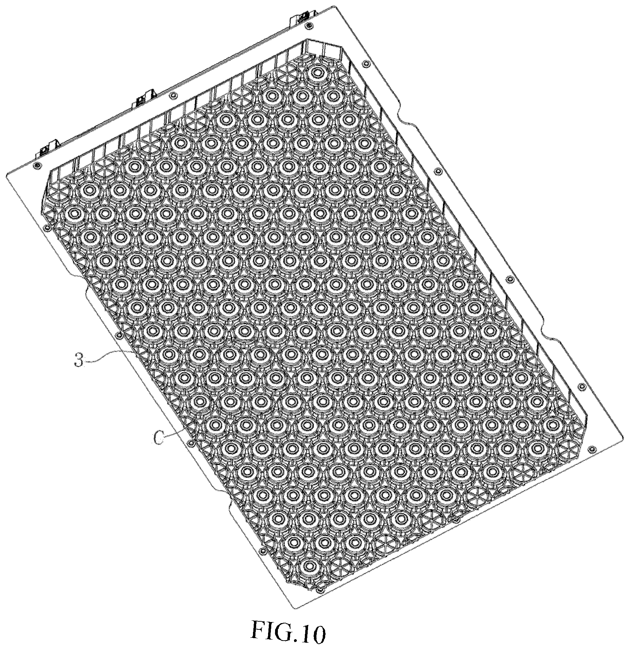

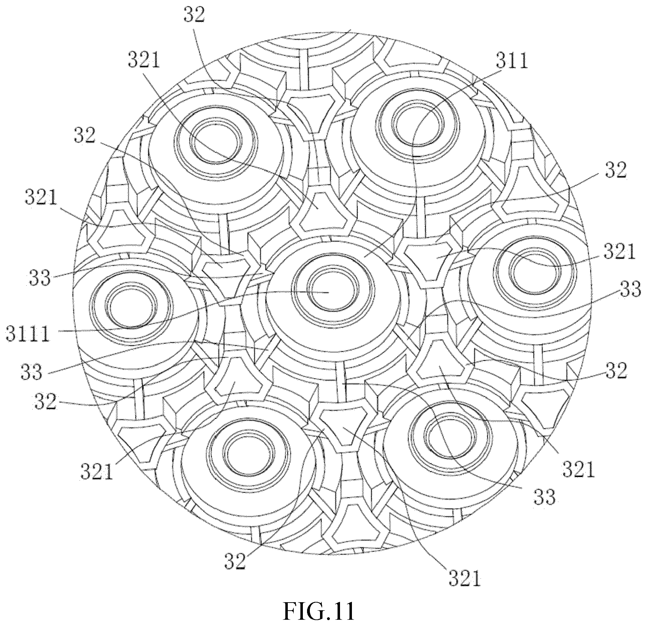

In some embodiments, referring to FIGS. 10 and 11, each of the cell holders 31 is provided with at least three ones of the supports 32 at the peripheral side of the cell holder 31, where the at least three supports 32 are evenly spaced apart around the center of the cell holder 31. In this design, when the thermal runway of the battery cell 21 occurs, the high-temperature substance discharged from the pressure relief portion can be rapidly discharged into the pressure relief cavity 7 through the second through hole 3111 and flows into the vicinity of the supports 32. As such, obstruction of the supports 32 for the substance can be effectively formed in the vicinity of the second through hole 3111, thereby more effectively preventing flow of the high-temperature substance in the pressure relief cavity 7 and prolonging the time for the high-temperature substance to remain inside the pressure relief cavity 7.

Referring to FIG. 10, each of the cell holders 31 further includes a plurality of limiting plates 312 proj ecting from the top portion of the supporting table 311 of the cell holder 31, where the plurality of limiting plates 312 are disposed around a peripheral side of the supporting table 311 and configured to limit the battery cell 32 corresponding to the cell holder 31, two adjacent ones of the limiting plates 312 are spaced apart to form a gap 313 through which the first through hole 321 is communicated with the top portion of the supporting table 311. In practice, a portion of the adhesive 4 bonds the battery cell 21 to the supporting table 311, and another portion of the adhesive 4 is bonded to the bottom portion of the accommodation trough 11 through the gap 313 and the first through hole 321.

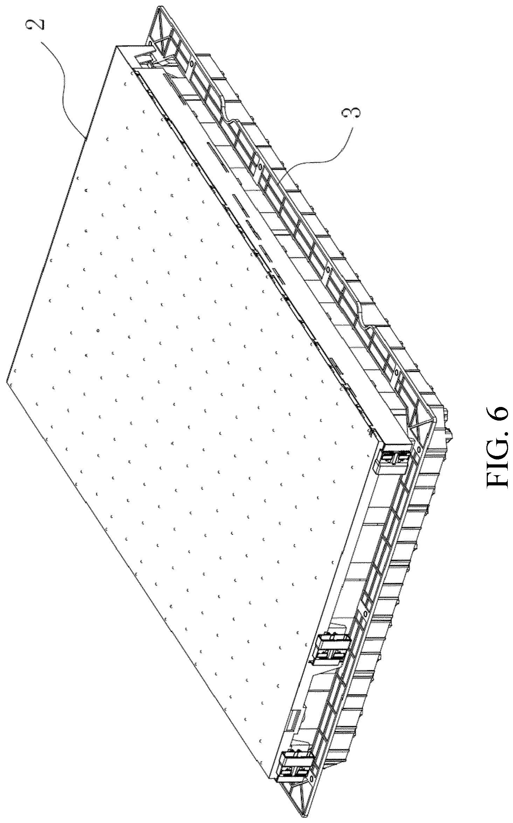

In the present embodiment, referring to FIGS. 6 and 11, each of the cell holders 31 is provided with six ones of the supports 32 at the peripheral side of the cell holder 31, where the six supports 32 are evenly spaced apart around the center of the cell holder 31. The cell holder 31 includes six limit plates 312, where the six limit plates 312 are disposed around the peripheral side of the supporting table 311, the gap 313 between any two adjacent ones of the limit plates 312 is located on the peripheral side of the first through hole 321, and the gap 313 on the same cell holder 31 correspond to the first through hole 321 at the peripheral side of the cell holder 31. As such, when the battery cell 21 is assembled on the cell holder 31, it may be ensured that the adhesive 4 in the supporting table 311 can uniformly overflow into the first through hole 321 at the peripheral side of the supporting table 311 through each of gaps 313.

In other embodiments, the number of the supports 32 at the peripheral side of the cell holder 31 may also be set as one, two, three, four or five, etc., and the number of the limit plates 312 on the cell holder 31 may also be set as one, two, three, four or five, etc.

In the present embodiments, referring to FIG. 4, FIG. 10, and FIG. 11, a reinforcing plate 33 is connected between each of the supports 32 and a supporting table 311 adjacent to the support 32 and projected from the lower side of the tray main body 30. In this design, a connection structure between the support 32 and the supporting table 311 is reinforced by the reinforcing plate 33, so that the supporting capacity of the tray 3 is improved. Furthermore, the supporting table 311, the plurality of supports 32, and the reinforcing plate 33 connected to the supporting table 311 can be formed into a honeycomb structure to ensure the stiffness of the tray 3, so that the reinforcing plate 33 can further form obstruction for the high-temperature substance in the pressure relief cavity 7 when the thermal runway of the battery pack occurs, which further prolongs the time for the high-temperature substance to remain in the pressure relief cavity 7.

In some embodiments, referring to FIG. 4, an extension portion 3112 is disposed at a side of the supporting table 311 away from the battery cell 21 and projected from the side of the supporting table 311, the extension 3112 is spaced from the bottom portion of the accommodation trough 11 and surrounds the second through hole 3111 one turn, and one end of the reinforcing plate 33 away from the support 32 is connected to the extension portion 3112.

In the present embodiments, the supports 32, the supporting table 311, the limiting plates 312, and the extension portion 3112 are integrally formed, so as to facilitate manufacture of the trays 3.

In some embodiment, the adhesive 4 may be a structural adhesive. The structural adhesive refers to an adhesive, which is high in strength (where a compressive strength is greater than 65MPa, a steel-steel tensile bonding strength is greater than 30 MPa, and a shear strength is greater than 18MPa), can withstand large loads, and is resistant to aging, fatigue, corrosion, stable in performance over an expected life, and is suitable for bonding a structural member subjected to strength. Such an adhesive 4 can provide a better strength for the battery modules 2 and the trays 3, and enables the battery modules 2, the trays 3, and the bottom portion of the accommodation trough 11 to provide a good bonding strength, thereby improving impact resistance of the battery modules 2.

In other embodiments, the adhesive 4 is not limited to the structural adhesive, but may be other types of adhesive 4.

In some embodiments, referring to FIG. 4, the battery pack further includes a cover plate 18 capable of covering the notch of the accommodation trough 11 and a thermally conductive adhesive layer 6 bonded to the top portion of each of the battery modules 2 by the thermally conductive adhesive layer 6. The cover plate 18 is bonded to the top portion of each of the battery modules 2 by the thermally conductive adhesive layer 6 to enable the battery modules 2 to be integrated with the cover plate 18, so that the cover plate 18 is not moved relative to the battery modules 2, thereby preventing the cover plate 18 from beating the battery modules 2 to generate noise in use. Since the thermally conductive adhesive layer 6 is disposed between the cover plate 18 and the battery modules 2, the impact resistance of the top portion of each of the battery modules 2 can be improved by the thermally conductive adhesive layer 6. The thermally conductive adhesive layer 6 has a thermally conductive property. The thermally conductive adhesive layer 6 can further transfer heat generated by each of the battery modules 2 to the case body 1, thereby facilitating heat dissipation of the battery pack. Specifically, the thermally conductive adhesive layer 6 is a thermally conductive structural adhesive, where the thermally conductive structural adhesive is a material of polyurethane.

In some embodiments, referring to FIG. 6, each of the battery modules 2 further includes a Busbar 22 disposed at the top portion of the battery cells 21, where the Busbar 22 is an electric conductor and capable of realizing series or parallel connection of a plurality of battery cells 21, and the thermally conductive adhesive layer 6 is bonded to the Busbar 22.

In some embodiments, the cover plate 18 is locked to the notch of the accommodation trough 11 by a locking member. The cover plate 18 is provided with a first locking hole, the notch of the accommodation trough 11 is provided with a second locking hole, and one end of the locking member is screwed in the second locking hole through the first locking hole, so that the cover plate 18, the thermally conductive adhesive layer 6 and the case body 1 are locked with each other. The locking member may be a locking bolt or a locking screw.

In the description of the present disclosure, it should be understood that orientations or position relationships indicated by the terms "upper", "lower", "left", and "right" are based on orientations or position relationships illustrated in the drawings. The terms are used to facilitate and simplify the description and operations of the present disclosure, rather than indicate or imply that the devices or elements referred to herein are required to have specific orientations or be constructed or operate in the specific orientations. Accordingly, the terms should not be construed as limiting the present disclosure. In addition, the terms "first" and "second" are used solely for the purpose of distinguishing elements in terms of description of the elements and not in a particular sense.

In the description of the present specification, a description with reference to the terms "an embodiment," "an example," and the like, means that a particular feature, structure, material, or characteristic described in connection with the embodiment or example is included in at least one embodiment or example of the present disclosure. In the present specification, the schematic representation of the above terms does not necessarily refer to the same embodiments or examples.

## Claims

1. A battery pack, comprising: a case body, a plurality of battery modules, and a plurality of trays each corresponding to corresponding one of the battery modules;
wherein the case body is provided with an accommodation trough and one or more pressure relief members; each of the trays comprises a tray body and a plurality of supports; each of the battery modules is bonded to an upper side of the tray body of the tray corresponding to the battery module by an adhesive; the plurality of supports are spaced apart and projected from a lower side of the tray body of the tray, a first end of each of the supports is connected to the tray body, a second end of the each of the supports is in contact with a bottom portion of the accommodation trough; the tray body and the bottom portion of the accommodation trough are spaced apart to form a pressure relief cavity communicating with the pressure relief members; and each of the supports is provided with a first through hole penetrating through the second end and the first end of the support, the first through hole is communicated with the upper side of the tray body, and the adhesive is bonded to the bottom portion of the accommodation trough through the first through hole from the upper side of the tray body.

2. The battery pack of claim 1, wherein each of the battery modules comprises a plurality of battery cells, the tray body of the tray corresponding to the each of the battery modules comprises a plurality of cell holders for holding the battery cells, the plurality of cell holders are spaced apart, each of the battery cells corresponds to corresponding one of the cell holders, each of the cell holders is provided with at least one of the supports at a peripheral side of the cell holder, and the first through hole in each of the supports is communicated with an interior of corresponding one of the cell holders provided with the support.

3. The battery pack of claim 2, wherein each of the cell holders comprises a supporting table configured to support corresponding one of the battery cells, the supporting table is provided with a second through hole penetrating through a top portion and a bottom portion of the supporting table, and the second through hole is opposite to a pressure relief portion of the battery cell.

4. The battery pack of claim 3, wherein each of the battery cells is a cylindrical cell and the second through hole is a circular hole.

5. The battery pack of claim 3, wherein each of the cell holders is provided with at least three ones of the supports at a peripheral side of the cell holder, and the at least three supports are evenly spaced apart around a center of the cell holder.

6. The battery pack of claim 3, wherein each of the cell holders further includes a plurality of limiting plates projected from the top portion of the supporting table of the cell holder, the plurality of limiting plates are disposed around a peripheral side of the supporting table and configured to limit the battery cell corresponding to the cell holder.

7. The battery pack of claim 6, wherein two adjacent ones of the limiting plates are spaced apart to form a gap through which the first through hole is communicated with the top portion of the supporting table.

8. The battery pack of claim 4, wherein a reinforcing plate is connected between each of the supports and a supporting table adjacent to the support, and projected from a lower side of the tray body of the tray provided with the supports.

9. The battery pack of any one of claims 1-8, wherein the adhesive is a structural adhesive.

10. The battery pack of any one of claims 1-8, further comprising: a thermally conductive adhesive layer.

11. The battery pack of claim 10, wherein the thermally conductive adhesive layer is a thermally conductive structural adhesive.

12. The battery pack of claim 10, further comprising: a cover plate, wherein the cover plate is provided at a notch of the accommodation trough and bonded to the top portion of each of the plurality of battery modules by the thermally conductive adhesive layer, and wherein the cover plate is locked to the notch of the accommodation trough by a locking member.

13. The battery pack of any one of claims 1-12, wherein the pressure relief members are disposed on an end plate of the case body.

14. The battery pack of any one of claims 1-13, wherein a side beam is projected from an inner side of a side plate of the case body toward the accommodation trough, and one or more pressure relief channels communicating with the pressure relief members are provided inside the side beam.

15. The battery pack of claim 8, wherein the supporting table, the supports, and the reinforcing plate connected with the supporting table are formed into a honeycomb structure.
